# EUROPEAN PATENT APPLICATION

(11) **EP 1 345 347 A2**
(43) Date of publication of application: **17.09.2003**
(21) Application number: 03004180.0
(22) Date of filing: 26.02.2003
(51) Int. Cl.: H04J 14/06

(54) **Optical transmission system, optical transmitter and methods thereof**

(30) Priority: 15.03.2002 JP 2002071140; 05.02.2003 JP 2003028069
(71) Applicant: KDDI Submarine Cable Systems Inc., Tokyo (JP)
(72) Inventor: Taga, Hidenori, KDDI Submarine Cable Systems Inc., Tokyo (JP); Yamada, Yuichi, KDDI Submarine Cable Systems Inc., Tokyo (JP); Shibano, Eiichi, KDDI Submarine Cable Systems Inc., Tokyo (JP); Goto, Koji, KDDI Submarine Cable Systems Inc., Tokyo (JP)
(74) Representative: Schaumburg, Thoenes & Thurn

(57) **Abstract**

To extend a distance of polarization-multiplexing, an optical transmitter in an optical transmission system has a first signal light output unit (24A, 124A) to output a first signal light (S1) of linear polarization to carry a first data (D1) using VSB modulation having one of sideband on a short wavelength side and sideband on a long wavelength side, a second signal light output unit (24B, 124B) to output a second signal light (S2) of linear polarization to carry a second data (D2) using VSB modulation having the other of sideband on a long wavelength side and sideband on a long wavelength side, and an optical coupler (26, 126) to couple the first signal light (S1) and the second signal light (S2) under different polarizations and output the coupled signal lights onto the optical transmission line (12, 112).

## Description

### FIELD OF THE INVENTION

This invention relates to an optical transmission system, an optical transmitter, and methods thereof, and more specifically relates to an optical transmission system, an optical transmitter, and method thereof using optical polarization division multiplexing.

### BACKGROUND OF THE INVENTION

In optical fiber transmission, an optical polarization division multiplexing system and a vestigial sideband (VSB) or single sideband (SSB) transmission system is well known as a method to increase a transmission rate of each wavelength. The optical polarization division multiplexing system is a system to transmit a signal using polarizations orthogonal to each other and theoretically it is possible to double a transmission rate. In this specification, both VSB transmission system and SSB transmission system are called generically as a VSB transmission system unless they are purposely distinguished.

Furthermore, the VSB transmission system transmits an optical carrier component and one sideband component alone after being modulated. By practically narrowing an optical spectral line width, it is possible to perform dense wavelength division multiplexing and accordingly a transmission capacity is expanded.

Although a number of transmission experiments of optical polarization division multiplexing system have been reported, the transmission distance is several hundred km at very most and there is no report of several thousand km needed for the transoceanic transmission. It is because the orthogonality of polarization necessary for optical polarization division multiplexing transmission becomes out of shape as the transmission distance becomes longer owing to polarization mode dispersion (PMD) and polarization dependent loss (PDL) of an optical fiber transmission line. When the orthogonality of polarization becomes out of shape, crosstalk between polarizations occurs and consequently deteriorates transmission characteristics.

### SUMMARY OF THE INVENTION

An object of the present invention is to provide an optical transmission system using optical polarization division multiplexing, an optical transmitter, and methods thereof applicable to long haul transmission such as a transoceanic transmission.

An optical transmission system according to the present invention comprises an optical transmitter, an optical transmission line, and an optical receiver. The optical transmitter comprises a first signal light output unit to output a first signal light of linear polarization to carry a first data using VSB modulation having one of sideband on a short wavelength side and sideband on a long wavelength side, a second signal light output unit to output a second signal light of linear polarization to carry a second data using VSB modulation having the other of sideband on a short wavelength side and sideband on a long wavelength side, and an optical coupler to couple the first signal light and the second signal light under different polarizations and output the coupled signal lights onto the optical transmission line. The optical receiver comprises an optical separator to separate a first optical component mainly including the first signal light and a second optical component mainly including the second optical signal out of the light from the optical transmission line, a first receiver to restore the first data from the first optical component, and a second receiver to restore the second data from the second optical component.

The crosstalk is greatly reduced because the sidebands left for the VSB modulation are transmitted under different polarizations.

In the optical transmission system according to the present invention, preferably the optical separator comprises a polarization beam splitter and a polarization tracking unit to control a polarization direction of the light from the optical transmission line so that one of polarization directions of the first and second signal lights included in the light from the optical transmission line coincides with that of the polarization beam splitter.

In the optical transmission system according to the present invention, preferably the optical separator comprises an optical splitter to split the light from the optical transmission line into two portions, a first signal light extractor to extract the first signal light out of one portion of the lights from the optical splitter, and a second signal light extractor to extract the second signal light out of the other portion of the lights from the optical splitter.

In the optical transmission system according to the present invention, preferably the first signal light extractor comprises a first polarization beam splitter and a polarization controller to control polarization of one light from the optical splitter so that the polarization direction of the second signal light included in one portion of the lights from the optical splitter coincides with that of the first polarization beam splitter and to apply the polarization-controlled light to the first polarization beam splitter. Furthermore, the second signal light extractor comprises a second polarization beam splitter and a polarization controller to control polarization of the other light from the optical splitter so that a polarization direction of the first signal light included in the other light from the optical splitter coincides with that of the second polarization beam splitter and to apply the controlled light to the second polarization beam splitter.

In the optical transmission system according to the present invention, preferably the optical transmitter further comprises a laser light source, wherein the first signal light output unit comprises a first VSB modulator to VSB-modulates an output light from the laser light source with the first data and the second signal light output unit comprises a second VSB modulator to VSB-modulates an output light from the laser light source with the second data.

In the optical transmission system according to the present invention, preferably the optical transmitter further comprises first and second laser light sources having a wavelength different from each other, wherein the first signal light output unit comprises a first VSB modulator to VSB-modulate an output light from the first laser light source with the first data and the second signal light output unit comprises a second VSB modulator to VSB-modulate an output light from the second laser light source with the second data.

In the optical transmission system according to the present invention, preferably the optical coupler comprises a polarization coupler to couple the first signal light and the second signal light under polarizations orthogonal to each other.

In the optical transmission system according to the present invention, preferably the optical coupler comprises a coupler to couple the first signal light and the second signal light under polarization directions different from each other on timeslots different from each other.

In the optical transmission system according to the present invention, preferably the optical transmitter comprises a polarization controller to control a polarization direction of the second signal light from the second signal light output unit, and the optical separator comprises a polarization beam splitter and a polarization tracking unit to control polarization of the light from the optical transmission line so that a polarization direction of the first signal light included in the light from the optical transmission line coincides with a first polarization direction of the polarization beam splitter, to apply the polarization-controlled light to the polarization beam splitter, and to control the polarization controller so that a polarization direction of the second signal light included in the light from the optical transmission line coincides with a second polarization direction orthogonal to the first polarization direction of the polarization beam splitter.

In the optical transmission system according to the present invention, preferably the optical transmitter comprises a first polarization controller to control polarization of the second signal light from the second signal light output unit. The optical separator comprises a second polarization controller to control polarization of the light from the optical transmission line, a polarization beam splitter to split a light from the second polarization controller into first and second optical components having a polarization direction orthogonal to each other, a first power detector to detect power of the first optical component and control the second polarization controller so as to increase the detected result, and a second power detector to detect power of the second optical component and control the first polarization controller so as to increase the detected result.

In an optical transmission method according to the present invention, a first signal light is generated by modulating a first optical carrier using VSB modulation having a sideband on a short wavelength side according to a first data. A second signal light is generated by modulating a second optical carrier using VSB modulation having a sideband on a long wavelength side according to a second data. The first signal light and the second signal light are multiplexed under polarizations different form each other and output onto an optical transmission line. First optical component mainly including the first signal light and second optical component mainly including the second signal light are separated out of the light from the optical transmission line. The first data is restored from the first optical component and the second data is restored from the second optical component.

Preferably, in the optical transmission method according to the present invention, the output light from the laser light source is divided into two portions to generate the first optical carrier and the second optical carrier.

Preferably, in the optical transmission method according to the present invention, the first signal light and the second signal light are multiplexed under polarization directions different from each other on timeslots different from each other.

An optical transmitter according to the present invention comprises a first signal light output unit to output a first signal light of linear polarization to carry a first data using VSB modulation having a sideband on a short wavelength side, a second signal light output unit to output a second signal light of linear polarization to carry a second data using VSB modulation having a sideband on a long wavelength side, and an optical coupler to couple the first signal light and the second signal light under polarization directions different from each other and output the coupled signal lights onto the optical transmission line.

Preferably, the optical transmitter according to the present invention further comprises a laser light source, wherein the first signal light output unit comprises a first VSB modulator to VSB-modulate an output light from the laser light source with the first data and the second signal light output unit comprises a second VSB modulator to VSB-modulate an output light from the laser light source with the second data.

Preferably, the optical transmitter according to the present invention further comprises first and second laser light sources having a wavelength different from each other, wherein the first signal light output unit comprises a first VSB modulator to VSB-modulate an output light from the first laser light source with the first data and the second signal light output unit comprises a second VSB modulator to VSB-modulate an output light from the second laser light source with the second data.

Preferably, in the optical transmitter according to the present invention, the optical coupler comprises a polarization coupler to couple the first signal light and the second signal light under polarizations orthogonal to each other.

Preferably, in the optical transmitter according to the present invention, the optical coupler comprises a coupler to couple the first signal light and the second signal light under polarization directions different from each other on timeslots different from each other.

Preferably, the optical transmitter according to the present invention further comprises a polarization controller to control polarization of the second signal light from the second signal light output unit and apply the polarization-controlled signal to the optical coupler, wherein the polarization controller is controlled by a control signal from an optical receiver for receiving the second signal light.

An optical transmission method according to the present invention comprises steps of generating a first signal light by modulating a first optical carrier using VSB modulation having a sideband on a short wavelength side according to a first data, generating a second signal light by modulating a second optical carrier using VSB modulation having a sideband on a long wavelength side according to a second data, and multiplexing the first signal light and the second signal light under polarization directions different from each other to output onto an optical transmission line.

Preferably, in the optical transmission method according to the present invention, an output light from a laser light source is divided into two portions to generate the first optical carrier and the second optical carrier.

Preferably, in the optical transmission method according to the present invention, the first signal light and the second signal light are multiplexed under polarization directions different from each other on timeslots different from each other and output onto an optical transmission line.

### BRIEF DESCRIPTION OF THE DRAWING

The above and other objects, features and advantages of the present invention will be apparent from the following detailed description of the preferred embodiments of the invention in conjunction with the accompanying drawings, in which:
Fig. 1 shows a schematic block diagram of a first embodiment of the invention;
Fig. 2 is a schematic diagram of a spectrum of an output light from a polarization beam splitter 26;
Fig. 3 is a schematic block diagram of a polarization tracking unit 30;
Fig. 4 is a schematic diagram of a spectrum of a received signal;
Fig. 5(A) shows a relation between a spectral distribution of a signal light Sa and ideal transmission characteristics of an optical filter 34A;
Fig. 5(B) shows a relation between a spectral distribution of a signal light Sb and ideal transmission characteristics of an optical filter 34B;
Fig. 6 shows an actual filter characteristic diagram of the optical filter 34A;
Fig. 7 shows a schematic diagram of a spectrum in which a wavelength of optical carrier is shifted by approximately 12.5 GHz (=0.1 nm);
Fig. 8 shows a schematic block diagram of an optical receiver 14a in a second embodiment of the present invention;
Fig. 9 shows a schematic block diagram of a third embodiment of the present invention;
Fig. 10 shows a schematic block diagram of an optical receiver 114a in which an optical receiver 114 is partly modified;
Fig. 11 shows a schematic block diagram of an optical transmitter modified for combining the time-division-multiplex;
Fig. 12 shows a schematic block diagram of another configuration of an optical transmitter modified for combining the time-division-multiplex;
Fig. 13 shows a timing example of signal lights S1 and S2 having been polarization-multiplexed and time-division-multiplexed; and
Fig. 14 shows waveform examples of two signals in an optical receiver after getting polarization-demultiplexed.

### DETAILED DESCRIPTION

Embodiments of the invention are explained below in detail with reference to the drawings.

### (A first embodiment)

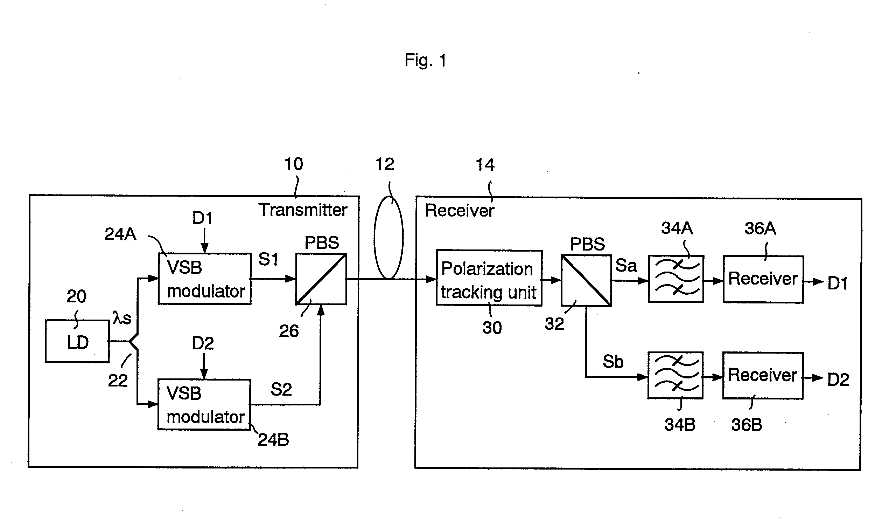

Fig. 1 shows a schematic block diagram of a first embodiment of the present invention. A signal light from an optical transmitter 10 propagates on an optical transmission line 12 and enters an optical receiver 14. The optical transmission line 12 comprises, for example, a repeaterless optical fiber transmission line having only optical fibers or an optical amplifier repeater transmission line in which a plurality of optical fibers are connected in serial with optical repeater amplifiers.

A laser light source 20 outputs a CW laser light having a signal wavelength λs. A splitter 22 splits the output light from the laser light source 20 into two portions and applies one portion to a VSB modulator 24A and the other to a VSB modulator 24B. The VSB modulator 24AVSB-modulates the input laser light with a data D1 and applies the signal light S1 of linear polarization to a polarization beam splitter 26. The VSB modulator 24B VSB-modulates the input laser light with a data D2 and applies the signal light S2 of linear polarization to the polarization beam splitter 26. Here, while the VSB modulator 24A eliminates a sideband on a long wavelength side (or on a short wavelength side), the VSB modulator 24B eliminates a sideband on a short wavelength side (or on a long wavelength side).

VSB modulation eliminates most (SSB modulation eliminates all) of one sideband generated by intensity modulation and can be realized by adding a phase modulator or an optical filter to an existing data modulator in order to eliminate unnecessary band components. Since the present invention does not intend to propose a new configuration of a VSB modulator, further explanation about the VSB modulators 24A and 24B is omitted.

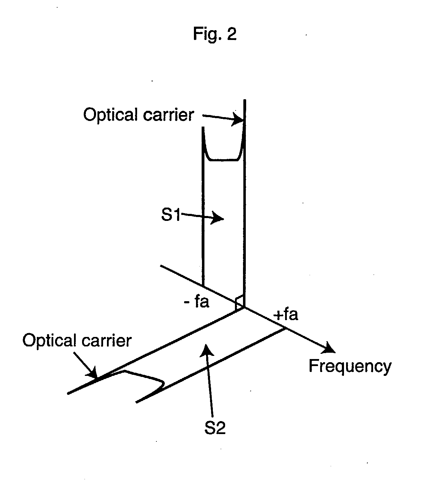

The polarization beam splitter 26 couples the signal lights S1 and S2 from the VSB modulators 24A and 24B with polarization directions orthogonal to each other and outputs onto an optical transmission line 12. Fig. 2 shows a schematic spectral diagram of an output light from the polarization beam splitter 26. To make it easily understandable, the signal lights S1 and S2 from the VSB modulators 24A and 24B are shown in orthogonal polarization state.

The signal lights propagated on the optical transmission line 12 enter an optical receiver 14. In the optical receiver 14, a polarization tracking unit 30 monitors optical power of an input signal light having one polarization (e.g. the signal light S1 from the optical transmission line 12 and automatically controls a polarization direction of the signal light so as to coincide with one polarization direction of the polarization beam splitter 32 according to the monitored result.

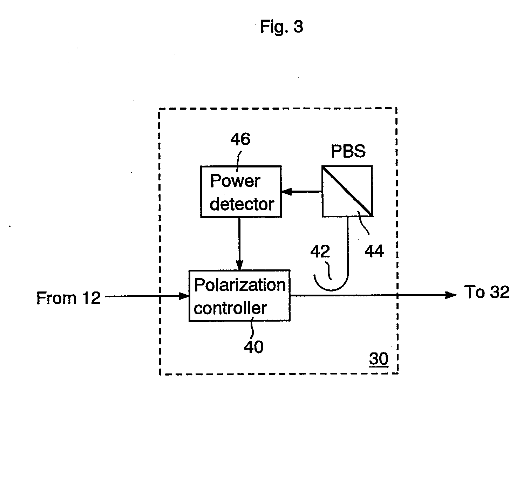

Fig. 3 shows a schematic diagram of the polarization tracking unit 30. The input light of the polarization tracking unit 30 from the optical transmission line 12 first enters a polarization controller 40. The polarization controller 40 is capable of controlling polarization of an input light to become linear polarization with a desirable direction. Such apparatus is described as a polarization converter in, for example, Japanese Patent Publication Laid-Open No. 2000-356760 corresponding to U.S. Patent Application No. 09/594,856, the entire contents of which are incorporated herein by reference. An optical separator 42 separates a portion out of an output light from the polarization controller 40 and applies it to a polarization beam splitter 44. The polarization beam splitter 44 splits a predetermined polarization direction component out of the light from the optical separator 42 and applies it to a power detector 46. The power detector 46 measures power of the light from the polarization beam splitter 44 and controls the polarization controller 40 so that the measured result becomes maximal.

Owing to the above feedback control of polarization, the polarization controller 40 controls polarization of an input light into a predetermined polarization direction to be split by the polarization beam splitter 44 regardless of a polarization direction of the input light and then outputs it. However, when the polarization control range of the polarization controller 40 is set too wide, it controls polarization of an input light so as to coincide with an intermediate polarization direction between the two polarization-division-multiplexed orthogonal polarizations. Therefore, it is necessary to narrow the polarization control range of the polarization controller 40 so as to control one of the two polarization-division-multiplexed orthogonal polarizations to become a predetermined polarization direction.

A polarization beam splitter 32 splits an output light from the polarization tracking unit 30 into a signal light Sa having a polarization component identical to a target polarization direction of the polarization tracking unit 30 and a signal light Sb having polarization orthogonal to the polarization direction component of the signal light Sa. The orthogonality of polarizations between the signal lights S1 and S2 becomes imperfect due to PMD and PDL of the optical transmission line 12, and thus each of signal lights Sa and Sb split by the polarization beam splitter 32 includes crosstalk.

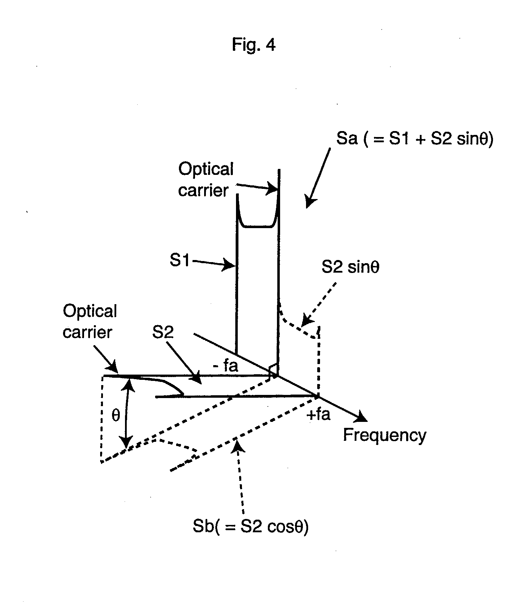

As shown in Fig. 4, for example, assuming that the polarization of the signal light S2 is rotated from the original direction by an angle θ, the signal light Sa is expressed as the sum of S1 and S2 sin θ and the signal light Sb as S2 cos θ when the polarization of the signal light S1 is identical to that of the signal light Sa split by the polarization beam splitter 32. S2 sin θ becomes crosstalk against the signal S1 and the signal light S2 is attenuated by cos θ. Assuming that a data D1 is restored from the signal light Sa and a data D2 is restored from the signal light Sb, generally a portion of the signal light S2 is mixed in the signal light Sa as crosstalk, and a portion of the signal light S1 is mixed in the signal light Sb as crosstalk.

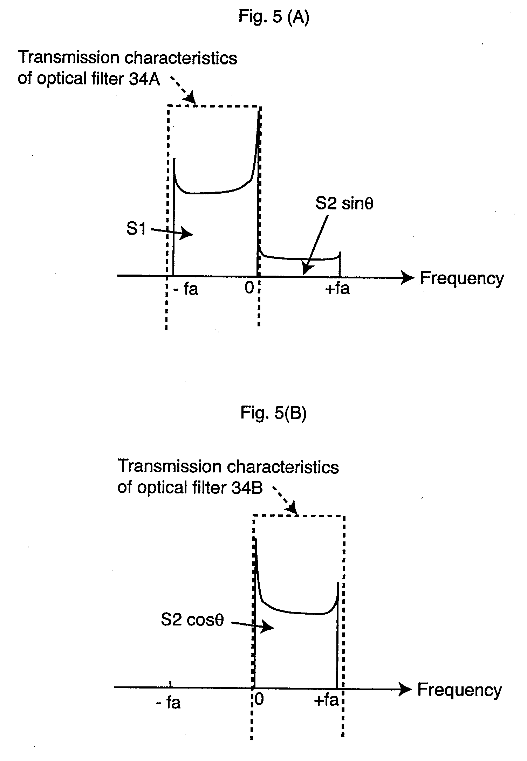

Although it is impossible to eliminate such crosstalk from different polarization in prior art, the present embodiment can efficiently eliminate crosstalk from different polarization using the optical filters 34A and 34B. That is, the optical filter 34A eliminates a sideband component unnecessary for the receiving process of the signal light S1 out of the signal light Sa split by the polarization beam splitter 32 and the optical filter 34B eliminates a sideband component unnecessary for the receiving process of the signal light S2 out of the signal light Sb split by the polarization beam splitter 32. Fig. 5(A) shows a relation between a spectral distribution of the signal light Sa and ideal transmission characteristics of the optical filter 34A and Fig. 5(B) shows a relation between a spectral distribution of the signal light Sb and ideal transmission characteristics of the optical filter 34B.

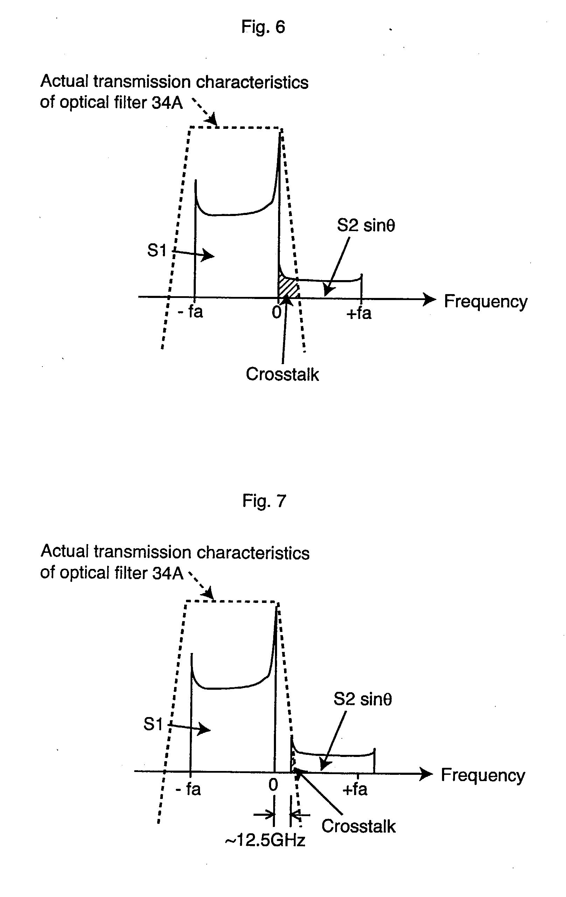

Practically, it is difficult to obtain such optical filters 34A and 34B having the steep cut-off characteristics as shown in Figs. 5(A) and 5(B) and actual transmission characteristics of the optical filter 34A, for example, show the gentle cut-off characteristics as shown in Fig. 6. In this case, a portion (the part of the oblique lines) of S2 sinθ becomes crosstalk. To reduce the crosstalk, optical carrier wavelengths of two signal lights to be polarization-division-multiplexed should be separated by approximately 12.5 GHz (=0.1 nm). To separate the optical carrier wavelengths, the VSB modulators 24A and 24B respectively should have a laser light source having a wavelength slightly different from the other.

The receiver 36A and 36B respectively receives a signal light from the optical filter 34A and 34B, restores the data D1 and D2 and outputs it.

### (A second embodiment)

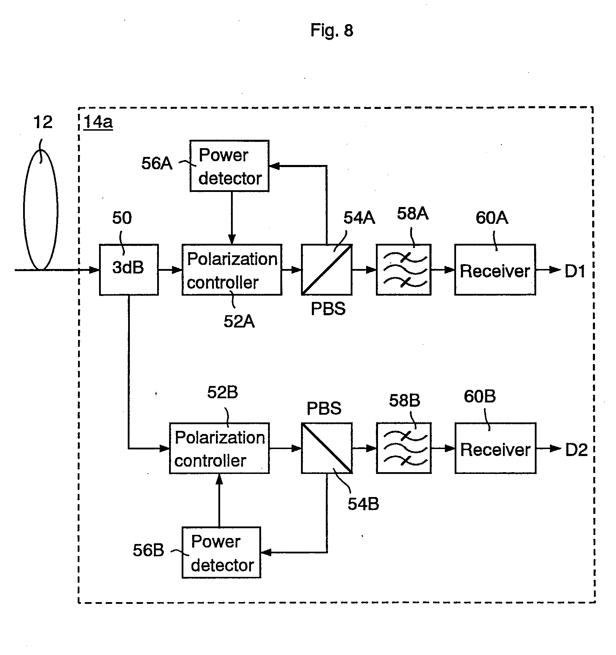

In the embodiment shown in Fig. 1, a polarization tracking unit 30 controls polarization of a received light according to the signal light S1 having one polarization and thus crosstalk is mixed due to the disorder of orthogonality of polarization. Fig. 8 shows a schematic block diagram of an optical receiver 14a to receive both signal lights S1 and S2 with smaller crosstalk.

A 3dB optical coupler 50 divides an input light from the optical transmission line 12 into two portions and applies one portion to a polarization controller 52A and the other to a polarization controller 52B. The polarization controller 52A and 52B has configuration and function identical to those of the polarization controller 40. Output lights from the polarization controller 52A and 52B enter polarization beam splitters 54A and 54B respectively.

The polarization beam splitter 54A applies a polarization component of a signal light desired to receive (here, it is assumed to be the signal light S1) to an optical filter 58A and also applies a polarization component orthogonal to the above polarization component to a power detector 56A. Similarly, the polarization beam splitter 54B applies a polarization component desired to receive (here, it is assumed to be the signal light S2) to an optical filter 58B and a polarization component orthogonal to the above polarization component to a power detector 56B. The power detectors 56A and 56B detect optical power having the polarization component applied from the polarization beam splitters 54A and 54B and control the polarization controllers 52A and 52B so that the optical power becomes maximal respectively.

Owing to the above control, polarization of output light from the polarization controller 52A is controlled to coincide with a polarization direction of the signal light S2 and polarization of output light from polarization controller 52B is controlled to coincide with a polarization direction of the signal light S1 Accordingly, the signal light entered the optical filter 58A ideally comprises only the signal light S1, and the signal light entered the optical filter 58B comprises only the signal light S2 . In other words, the signal light entered the optical filter 58A does not include the crosstalk of the signal light S2, and the signal light entered the optical filter 58B does not include the crosstalk of the signal light S1

In a configuration shown in Fig. 8, since each of the signal lights entered the optical filter 58A and 58B does not include the signal light component of the other polarization, the cut-off characteristics of the optical filters 58A and 58B do not need to be steep. Also, it is even possible to omit the optical filters 58A and 58B.

### (A third embodiment)

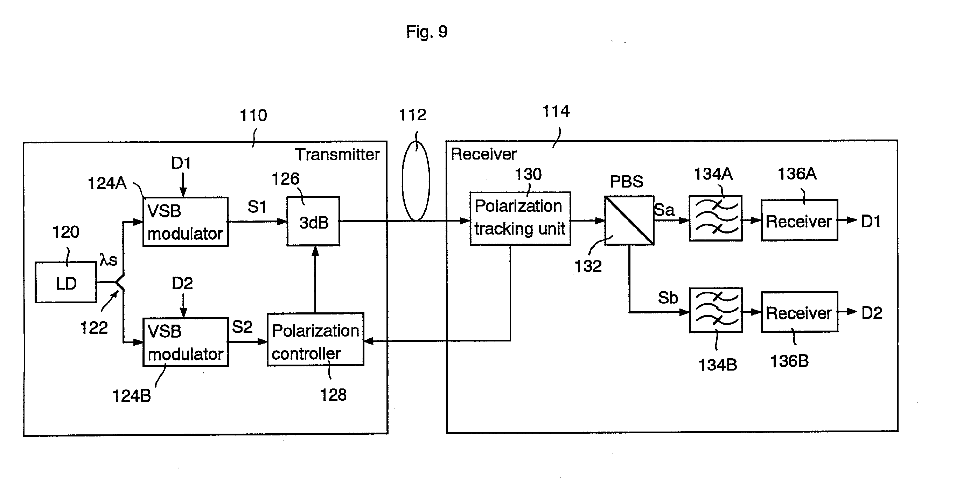

Fig. 9 shows a schematic block diagram of a third embodiment according to the present invention. In this embodiment, a polarization tracking unit disposed on each of transmitter and receiver reduces crosstalk between orthogonal polarization components.

A signal light from a transmitter 110 propagates on an optical transmission line 112 and enters an optical receiver 114. The optical transmission line 112, similarly to the optical transmission 12, comprises a repeaterless optical fiber transmission line composed of optical fibers alone or an optical amplifier repeater transmission line in which a plurality of optical fibers are connected in serial by optical repeater amplifiers.

A laser light source 120 outputs a CW laser light of signal wavelength λs. A splitter 122 splits the output light from the laser light source 120 into two portions and applies one portion to a VSB modulation 124A and the other to a VSB modulator 124B. The VSB modulator 124A VSB-modulates the input laser light with a data D1 and outputs a signal light S1 having linear polarization to a 3dB optical coupler 126. The VSB modulator 124B VSB-modulates the input laser light with a data D2 and outputs a signal light S2 having linear polarization to a polarization controller 128. The polarization controller 128 controls the polarization of the signal light S2 from the VSB modulator 124B to become a designated direction according to a control signal from an optical receiver 114. An output light from the polarization controller 128 enters a 3 dB optical coupler 126. Similarly to the embodiment shown in Fig. 1, when the VSB modulator 124A eliminates a sideband on a long wavelength side (or on a short wavelength side), the VSB modulator 124B eliminates a sideband on a short wavelength side (or on a long wavelength side).

The 3 dB optical coupler 126 couples the signal light S1 from the VSB modulator 124A and the signal light S2 from the polarization controller 128 and outputs onto the optical transmission line 112.

The signal lights propagated on the optical transmission line 112 enter the optical receiver 114. In the optical receiver 114, a polarization tracking unit 130, similarly to the polarization tracking unit 30, monitors optical power of a signal light having one polarization (e.g. the signal light S1) from the optical transmission line 112 and automatically controls the polarization direction of the signal light so as to coincide with one polarization direction of a polarization beam splitter 132 according to the monitored result. The polarization tracking unit 130 also monitors optical power of a signal light having the other polarization (e.g. the signal light S2) and controls a polarization direction of the signal light S2 using the polarization controller 128 so that the polarization direction of the signal light S2 becomes orthogonal to that of the signal light S1 at the polarization tracking unit 130 according to the monitored result.

The polarization beam splitter 132 splits an output light from the polarization tracking unit 130 into two orthogonal polarization components Sa and Sb and applies the component Sa to the optical filter 134A and the component Sb to the optical filter 134B. Owing to the polarization tracking units 128 and 130, the component Sa ideally comprises only the signal light S1 (or S2), and the component Sb comprises only the signal light S2 (or S1) That is, the crosstalk becomes so small that it can be negligible. Even though the polarization directions of the signal lights S1 and S2 vary while propagating on the optical transmission line 112 due to PMD and PDL of the optical transmission line 112, the polarization directions of the signal lights S1 and S2 are in the condition to be orthogonal when they enter the polarization beam splitter 132. Therefore, it is not necessary to have such steep cut-off characteristics shown in Figs. 5(A) and 5(B) for the transmission factor of the optical filters 134 A and 134B.

The optical filter 134A eliminates a sideband component unnecessary for the receiving process of the signal light S1 out of the signal light Sa split by the polarization beam splitter 132, and the optical filter 134B eliminates a sideband component unnecessary for the receiving process of the signal light S2 out of the signal light Sb split by the polarization beam splitter 132. Receivers 136A and 136B receive a signal light from the optical filters 134A and 134B, and restore and output the data D1 and D2 respectively.

### (A fourth embodiment)

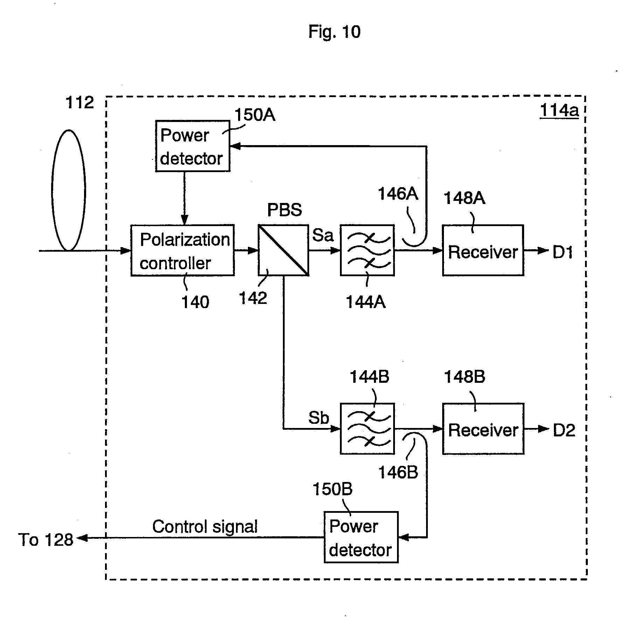

Fig. 10 shows a schematic block diagram of an optical receiving apparatus 114a in which a part of the optical receiving apparatus 114 is modified. In an embodiment shown in Fig. 10, the polarization tracking unit 130 and the polarization beam splitter 132 are unified.

That is, a light entered the optical receiver 114a from the optical transmission line 112 firstly inputs a polarization controller 140. The polarization controller 140 has configuration and function identical to those of the polarization controller 40 and controls polarization of the input light to become linear polarization having any polarization direction specified by an outer control signal.

The polarization beam splitter 142 splits an output light from the polarization controller 140 into two linear polarization components Sa and Sb orthogonal to each other and applies the component Sa to an optical filter 144A and the component Sb to an optical filter 144B. Here, it is assumed that the signal light Sa comprises mainly the signal light S1 and the signal light Sb comprises mainly the signal light S2. The optical filter 144A eliminates a sideband component unnecessary to the receiving process of the signal light S1 out of the signal light Sa split by the polarization beam splitter 142, and the optical filter 144B eliminates a sideband component unnecessary for the receiving process of the signal light S2 out of the signal light Sb split by the polarization beam splitter 142.

An optical splitter 146A applies most of the output light from the optical filter 144A to a receiver 148A and the rest to a power detector 150A. Similarly, an optical splitter 146B applies most of the output light from the optical filter 144B to a receiver 148B and the rest to a power detector 150B.

The receivers 148A and 148B receive the signal lights Sa and Sb from the optical splitters 146A and 146B, restore the data D1 and D2, and output them respectively.

The power detector 150A detects the power of light from the optical splitter 146A and controls the polarization controller 140 so that the detecting power becomes maximal. Accordingly, the polarization controller 140 controls a polarization direction of a light entered from the optical transmission line 112 so that the signal light S1 in the output light from the polarization controller 140 is maximally split as the signal light Sa. With this operation, the receiving of the signal light S1 is optimized and ideally the signal light S1 does not mix in the signal light Sb as crosstalk.

On the other hand, the power detector 150B detects the power of light from the optical splitter 146B and controls the polarization controller 128 so that the detected power becomes maximal. Accordingly, the polarization controller 128 controls a polarization direction of the output signal light S2 from the VSB modulator 124B so that the signal light S2 in the output light from the polarization controller 140 is maximally split as the signal light Sb. Consequently, the polarization direction of the signal light S2 becomes completely orthogonal to the polarization direction of the signal light S1 at the output of the polarization controller 140. Owing to the control, the receiving of the signal light S2 is optimized and ideally the signal light S2 does not mix in the signal light Sa as crosstalk.

As stated above, in the configuration shown in Fig. 10, the polarization directions of the signal lights S1 and S2 become completely orthogonal in theory, and the polarization beam splitter 142 can split the signal lights S1 and S2 completely, namely without any crosstalk.

### (A fifth embodiment)

It became clear that, when two VSB modulated signal lights, which suppressed sidebands are different from each other, are merely coupled at the same timing, it is necessary to suppress the crosstalk with a sufficiently high suppression factor (40 dB or more). This is because optical carriers of both VSB modulated lights interfere with each other to generate so-called coherent crosstalk.

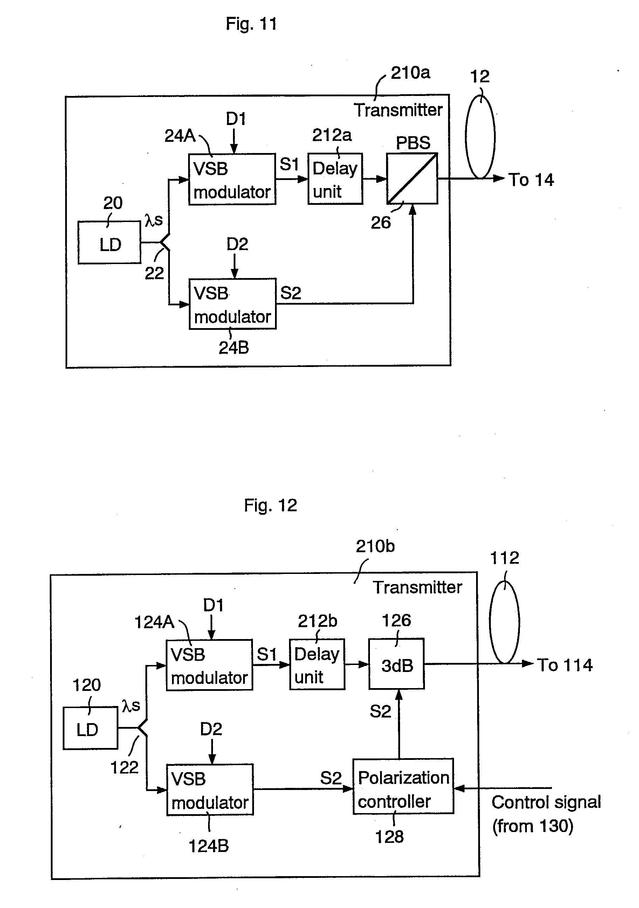

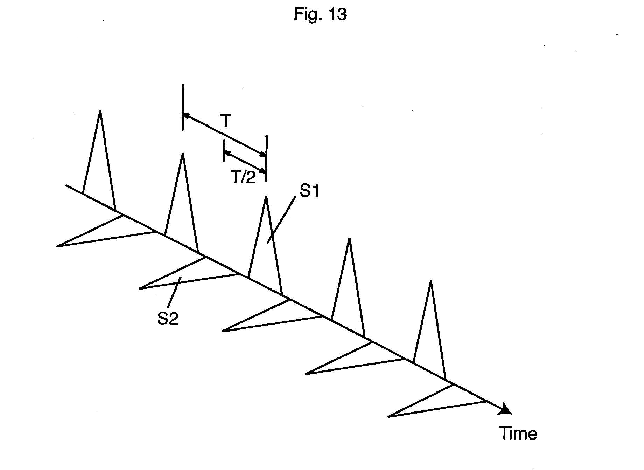

It is possible to prevent the coherent crosstalk between the optical carriers of the two VSB modulated lights by time-division-multiplexing the two VSB modulated lights. Fig. 11 shows a schematic block diagram wherein the optical transmitter 10 in Fig. 1 is modified to have such function as an optical transmitter 210a, and Fig. 12 shows a schematic block diagram wherein the optical transmitter 110 in Fig. 9 is modified as an optical transmitter 210b. Fig. 13 shows a time waveform example after VSB modulated signals S1 and S2 are time-division-multiplexed.

In the optical transmitter 210a shown in Fig. 12, an optical delay unit 212a of delay time τ is disposed between a VSB modulator 24A and PBS 26. In an optical transmitter 210b shown in Fig. 13, an optical delay unit 212b of delay time τ is disposed between a VSB modulator 124A and a 3 dB optical coupler 126.

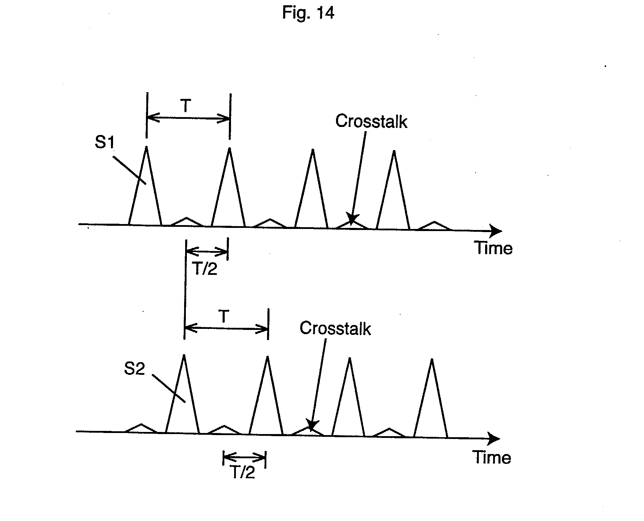

In Figs. 11 and 12, it is required for both VSB modulated signals S1 and S2 to comprise RZ optical pulses having a duty factor of 50% or less. Assuming that the pulse period is T, the delay time τ of the optical delay units 212a and 212b is set to T/2. With this configuration, as shown in Fig. 13, the VSB modulated signal light S1 and the VSB modulated signal light S2 are time-division-multiplexed. Fig. 14 shows a waveform example when the signal lights S1 and S2, which were polarization-multiplexed and time-division-multiplexed as shown in Fig. 13, are polarization-demultiplexed. After the polarization-demultiplex, in an optical component Sa comprising mainly the signal light S1 the crosstalk from the signal light S2 is mixed between optical pulses carrying the data D1. Similarly, after the polarization-demultiplex, in an optical component Sb comprising mainly the signal light S2, the crosstalk from the signal light S1 is mixed between optical pulses carrying the data D2. Such crosstalk can be simply suppressed by disposing an optical gate to transmit the optical pulse part carrying the data D1, D2 and to suppress the other parts. However, since the two VSB signal lights S1 and S2 are arranged on different timeslots in the time domain, such serious signal deterioration caused by the coherent crosstalk does not occur even if an optical gate is not disposed.

Obviously, although the signal light S1 is delayed in Figs. 11 and 12, it is also applicable to delay the signal light S2. For instance, it is applicable to dispose an optical delay unit equivalent to the optical delay unit 212a between the VSB modulator 24B and the PBS 26. Also, it is applicable to dispose an optical delay unit equivalent to the optical delay unit 212b between the VSB 124B and the polarization controller 128 or between the polarization controller 128 and the 3 dB optical coupler 126 . Furthermore, it is applicable to dispose optical delay units equivalent to the optical delay units 212a and 212b at the input side of the VSB modulator 24A or 24B.

### (The others)

It is applicable for each embodiment shown in Figs. 8, 9, and 10 to slightly shift optical carrier wavelengths of the two signal lights S1 and S2

In the above each embodiment, good transmission characteristics are realized using polarization division multiplexing and VSB modulation together. By using the polarization division multiplexing, intervals of wavelengths can widen twice as much in the same transmission capacity. That is, the resolution of a wavelength division multiplexer in wavelength division multiplexing transmission is relieved twice as much. For instance, a wavelength division multiplexer with the resolution of 0.4 nm can be used instead of a wavelength division multiplexer with the resolution of 0.2 nm and this reduces the system costs.

As readily understandable from the aforementioned explanation, according to the invention, it is possible to realize satisfactory transmission characteristics by combining orthogonal polarization multiplexing and VSB modulation. For example, it is even possible to realize such a long haul transmission as transoceanic transmission.

By utilizing the polarization multiplex and the time division multiplex at the same time, it is possible to greatly reduce the coherent crosstalk. Owing to the polarization multiplex, the interference hardly occurs at the overlapped part of pulses between the signal lights S1 and S2 . Therefore, in the present invention, it is possible to make the pulse width of the signal pulses of the signal lights S1 and S2 wider compared to that in the case wherein the time-division-multiplex alone is utilized. Accordingly, the load of specs for the laser light source, VSB modulator and optical receiver is reduced.

While the invention has been described with reference to the specific embodiment, it will be apparent to those skilled in the art that various changes and modifications can be made to the specific embodiment without departing from the spirit and scope of the invention as defined in the claims.

## Claims

1. An optical transmission system comprising an optical transmitter (10, 110, 210a, 210b), an optical transmission line (12, 112), and an optical receiver (14, 114) wherein
the optical transmitter (10, 110, 210a, 210b) comprises
a first signal light output unit (24A, 124A) to output a first signal light (S1) of linear polarization to carry a first data (D1) using VSB modulation having one of sideband on a short wavelength side and sideband on a long wavelength side;
a second signal light output unit (24B, 124B) to output a second signal light (S2) of linear polarization to carry a second data (D2) using VSB modulation having the other of sideband on a short wavelength side and sideband on a long wavelength side; and
an optical coupler (26; 126; 26, 212a; 126, 212b) to couple the first signal light (S1)and the second signal light (S2) under different polarizations and output the coupled signal lights onto the optical transmission line (12, 112); and
the optical receiver (14, 114) comprises
an optical separator (30, 32; 130, 132) to separate a first optical component (Sa) mainly including the first signal light (S1) and a second optical component (Sb) mainly including the second signal light (S2) out of the input light from the optical transmission line (12, 112);
a first receiver (36A, 136A) to restore the first data (D1) from the first optical component (Sa); and
a second receiver (36B, 136B) to restore the second data (D2) from the second optical component (Sb).

2. The system of claim 1 wherein
the optical separator comprises
a polarization beam splitter (32); and
a polarization tracking unit (30) to control polarization of the input light from the optical transmission line (12) so that one of polarization directions of the first and second signal lights (S1 S2) included in the input light from the optical transmission line (12) coincides with that of the polarization beam splitter (32).

3. The system of claim 1 wherein
the optical separator comprises
an optical splitter (50) to split the input light from the optical transmission line (12) into two portions;
a first signal light extractor (52A, 54A, 56A) to extract the first signal light (S1) out of one portion output light from the optical splitter (50); and
a second signal light extractor (52B, 54B, 56B) to extract the second signal light (S2) out of the other portion output light from the optical splitter (50).

4. The system of claim 3 wherein
the first signal light extractor comprises
a first polarization beam splitter (54A); and
a polarization controller (52A, 56A) to control a polarization of one portion from the optical splitter (50) so that a polarization direction of the second signal light (S2) included in one portion from the optical splitter (50) coincides with that of the first polarization beam splitter (54A) and to apply the polarization-controlled light to the first polarization beam splitter (54A); and
the second signal light extractor comprises
a second polarization beam splitter (54B); and
a polarization controller (52B, 56B) to control a polarization direction of the other portion from the optical splitter (54B) so that a polarization direction of the first signal light (S1) included in the other portion from the optical splitter (50) coincides with a polarization direction of the second polarization beam splitter (54B) and to apply the polarization-controlled light to the second polarization beam splitter (54B).

5. The system of claim 1 to 4 wherein
the optical transmitter (10, 110, 210a, 210b) further comprises a laser light source (20, 120);
the first signal light output unit comprises a first VSB modulator (24A, 124A) to VSB-modulate an output light from the laser light source with the first data; and
the second signal light output unit comprises a second VSB modulator (24B, 124B) to VSB-modulate the output light from the laser light source with the second data.

6. The system of claim 1 to 4 wherein
the optical transmitter (10, 110) further comprises first and second laser light sources having a wavelength different from each other;
the first signal light output unit comprises a first VSB modulator (24A, 124A) to VSB-modulate an output light from the first laser light source with the first data; and
the second signal light output unit comprises a second VSB modulator (24B, 124B) to VSB-modulate an output light from the second laser light source with the second data.

7. The system of claim 1 to 6 wherein the optical coupler comprises a polarization coupler (26) to couple the first and second signal lights (S1, S2) under polarizations orthogonal to each other.

8. The system of claim 1 to 6 wherein the optical coupler comprises a coupler (26, 212a; 126, 212b) to couple the first and second signal lights (S1, S2) under polarization directions different from each other on timeslots different from each other.

9. The system of claim 1 wherein
the optical transmitter (110, 210b) comprises a polarization controller (128) to control a polarization direction of the second signal light (S2) from the second signal light output unit (124B); and
the optical separator comprises
a polarization beam splitter (132); and
a polarization tracking unit (130) to control a polarization direction of an input light from the optical transmission line (112) so that a polarization direction of the first signal light (S1) included in the input light from the optical transmission line (112) coincides with a first polarization direction of the polarization beam splitter (132), to apply the polarization-controlled light to the polarization beam splitter (132), and to control the polarization controller (128) so that a polarization direction of the second signal light (S2) included in the input light from the optical transmission line (112) coincides with a second polarization direction orthogonal to the first polarization direction of the polarization beam splitter (132).

10. The system of claim 1 wherein
the optical transmitter (110, 210b) further comprises a first polarization controller (128) to control a polarization direction of the second signal light (S2) from the second signal light output unit (124B); and
the optical separator comprises
a second polarization controller (140) to control a polarization direction of the input light from the optical transmission line (112);
a polarization beam splitter (142) to split an output light from the second polarization controller (140) into the first and second optical components (Sa, Sb) having a polarization direction orthogonal to each other;
a first power detector (150A) to detect power of the first optical component (Sa) and control the second polarization controller (140) so as to increase the detected result; and
a second power detector (150B) to detect power of the second optical component (Sb) and control the first polarization controller (128) so as to increase the detected result.

11. An optical transmission method comprising steps of:
generating a first signal light (S1) by modulating a first optical carrier with VSB-modulation having a sideband on a short wavelength side according to a first data (D1);
generating a second signal light (S2) by modulating a second optical carrier with VSB modulation having a sideband on a long wavelength side according to a second data (D2);
multiplexing the first signal light (S1 and second signal light (S2) under different polarizations to output onto an optical transmission line;
separating a first optical component (Sa) mainly including the first signal light (S1 and a second optical component (Sb) mainly including the second signal light (S2) out of an input light from the optical transmission line;
restoring the first data (D1) from the first optical component (Sa); and
restoring the second data (D2) from the second optical component (Sb).

12. The method of claim 11 further comprises a step of separating an output light from a laser light source into two portions to generate the first optical carrier and the second optical carrier.

13. The method of claim 11 wherein the step of multiplexing the first signal light (S1) and second signal light (S2) under different polarizations to output onto the optical transmission line is a step of multiplexing the first signal light ( S1 ) and the second signal light (S2) under polarization directions different from each other on timeslots different from each other and outputting onto the optical transmission line.

14. An optical transmitter comprising:
a first signal light output unit (24A, 124A) to output a first signal light (S1) of a linear polarization to carry a first data (D1) using VSB modulation having a sideband on a short wavelength side ;
a second signal light output unit (24B, 124B) to output a second signal light (S2) of a linear polarization to carry a second data (D2) using VSB modulation having a sideband on a long wavelength side; and
an optical coupler (26; 126; 26, 212a; 126, 212b) to couple the first signal light (S1) and the second signal light (S2) under polarization directions different from each other and output the coupled signal lights onto the optical transmission line (12, 112).

15. The optical transmitter of claim 14 further comprising a laser light source (20, 120) wherein
the first signal light output unit comprises a first VSB modulator (24A, 124A) to VSB-modulate an output light from the laser light source with the first data; and
the second signal light output unit comprises a second VSB modulator (24B, 124B) to VSB-modulate the output light from the laser light source with the second data.

16. The optical transmitter of claim 14 further comprising first and second laser light sources having a wavelength different from each other wherein
the first signal light output unit comprises a first VSB modulator (24A, 124A) to VSB-modulate an output light from the first laser light source with the first data; and
the second signal light output unit comprises a second VSB modulator (24B, 124B) to VSB-modulate an output light from the second laser light source with the second data.

17. The optical transmitter of claim 14 wherein the optical coupler comprises a polarization coupler (26) to couple the first signal light and the second signal light under polarizations orthogonal to each other.

18. The optical transmitter of claim 14 wherein the optical coupler comprises a coupler (26, 212a; 126, 212b) to couple the first signal light (S1) and the second signal light (S2) under polarization directions different from each other on timeslots different from each other.

19. The optical transmitter of claim 14 further comprising a polarization controller (128) to control a polarization direction of the second signal light (S2) from the second signal light output unit (124B) and apply to the optical coupler (126) wherein the polarization controller (128) is controlled by a control signal from an optical receiver to receive the second signal light.

20. An optical transmission method comprising steps of:
generating a first signal light (S1) by modulating a first optical carrier using VSB modulation having a sideband on a short wavelength side according to a first data (D1);
generating a second signal light by (S2) modulating a second optical carrier using VSB modulation having a sideband on a long wavelength side according to a second data (D2); and
multiplexing the first signal light (S1) and the second signal light (S2) under polarization directions different from each other to output onto an optical transmission line.

21. The method of claim 20 further separating an output light from a laser light source into two portions to generate the first optical carrier and the second optical carrier.

22. The method of claim 20 wherein the step of multiplexing the first signal light (S1) and the second signal light (S2) under polarization directions different from each other to output onto the optical transmission line is a step of multiplexing the first signal light (S1) and the second signal light (S2) under polarization directions different from each other on timeslots different from each other to output onto the optical transmission line.
